# FASCICULE DE BREVET EUROPEEN

(11) **EP 1 142 781 B1**
(45) Date de publication et mention de la délivrance du brevet: **28.04.2004**
(21) Numéro de dépôt: 01400451.9
(22) Date de dépôt: 21.02.2001
(51) Int. Cl.: B62M 3/08

(54) **Dispositif de fixation automatique et pédale de cycliste pourvue d'un tel dispositif**
Fahrradpedal mit automatischem Fixierungselement
Cycle pedal with automatic fixing element

(30) Priorité: 07.04.2000 FR 0004452
(43) Date de publication de la demande: 10.10.2001
(73) Titulaire: Look Cycle International, 58000 Nevers (FR)
(72) Inventeur: Peyre, Henri, 58270 Saint Benin d'Azy (FR)
(74) Mandataire: Boutin, Antoine

(56) Documents cités:
- EP-A- 0 393 585
- EP-A- 0 568 109

## Description

La présente invention concerne un dispositif de fixation automatique pour une pédale de cycle, notamment, mais non exclusivement, pour une pédale de cycle tout terrain (VTT). Elle concerne également une pédale pourvue d'un tel dispositif.

EP-A-0 568 109 montre un dispositif de fixation automatique selon le préamble de la revendication 1 et une pédale de cycle munie d'un tel dispositif.

On connaît des pédales automatiques de cycle de ce genre, comportant un organe d'enclenchement avant constitué par une griffe formant butée pour enclencher l'extrémité avant mâle d'un élément d'accrochage sous forme d'une platine formant cale généralement logée dans un creux de la semelle d'une chaussure de cycliste, et un organe d'enclenchement arrière mâle constitué par une griffe mobile pour enclencher une extrémité arrière femelle de l'élément d'accrochage.

Sur les pédales connues de ce genre, une conformation mâle à l'extrémité avant de la cale est ainsi reçue dans une conformation femelle de l'organe d'enclenchement avant de la pédale.

La griffe arrière est montée pivotante sur un axe et elle est précontrainte par un moyen élastique vers une position d'enclenchement tout en étant déplaçable sous la pression de la chaussure de cycliste entre une position ouverte d'écartement permettant l'insertion de la cale entre les deux griffes et une position fermée d'enclenchement assurant la solidarisation de la cale avec la pédale automatique.

Le moyen élastique est généralement constitué par un ressort hélicoïdal et la griffe arrière peut être déplacée à force, contre l'effet de l'action du ressort, vers sa position ouverte pour dégager la cale de sa prise entre les griffes. Ce déplacement de la griffe arrière est obtenu à l'aide de l'extrémité arrière de la cale dont la conformation femelle présente des parois latérales obliques formant cames qui, lors d'une rotation de la chaussure vers l'extérieur, repousse la griffe vers l'arrière. Ce déplacement de la griffe arrière vers la position ouverte peut par ailleurs être obtenu de la même manière lors d'une rotation de la chaussure vers l'intérieur, par exemple si le cycliste fait une chute. La tension du ressort peut en général être réglée à l'aide d'une vis de réglage pour modifier l'effort nécessaire pour le dégagement de la chaussure.

On connaît également du document FR-A-2 796 359, qui ne fait pas partie de l'art antérieur, une pédale automatique pour cycle, en particulier pour un cycle de tout terrain (VTT). Cette pédale automatique est une pédale à double surface de retenue.

Dans cette pédale, l'organe arrière mobile d'enclenchement de l'élément d'accrochage constitue un élément élastique fixé à encastrement sur le corps de pédale et travaillant en flexion entre une position fléchie de libération de l'élément d'accrochage et une position de retenue de celui-ci contre une surface de retenue sur le corps de pédale. La tension de cet élément élastique peut être réglée par le déplacement d'une plaquette dont le rebord supérieur définit la ligne de flexion de l'élément élastique.

Sur la cale utilisée, les extrémités avant et arrière dudit élément sont des extrémités à configuration femelle aptes à êtres prises en tenaille entre les organes mâles d'enclenchement avant et arrière de la pédale automatique.

Sur ce genre de pédale dans lequel la cale se trouve dans un évidemment ou creux de la semelle, il y a cependant parfois des problèmes pour le dégagement de la chaussure, qu'un tel dégagement soit déclenché par le cycliste qui fait une rotation du pied correspondant vers l'extérieur, ou qu'il soit déclenché par la chute du cycliste lors de laquelle l'un de ses pieds peut être amené à pivoter vers l'extérieur ou vers l'intérieur. Cela est d'autant plus critique pour les pédales dans la pratique du tout terrain où les chutes sont plus fréquentes.

Sur les pédales existantes, il y a également un besoin de faciliter l'enclenchement de la cale entre les griffes lors du chaussage en réduisant la force demandée de la part du cycliste.

Le but de l'invention est de proposer une pédale destinée à remédier aux inconvénients des pédales antérieurement connues en proposant un dispositif de fixation permettant l'enclenchement aisé de la cale sur la pédale et qui en même temps réduit les forces nécessaires au chaussage et au déchaussage, tout en assurant le maintien de la cale d'une manière efficace entre les éléments d'accrochage.

L'invention a pour objet un dispositif de fixation automatique d'une chaussure de cycliste sur une pédale de bicyclette, notamment pour une bicyclette tout terrain, comportant en combinaison:
- d'une part une platine formant cale solidaire d'une semelle de chaussure et disposée dans un creux de celle-ci comportant des rebords latéraux s'étendant de part et d'autre de la cale,
- d'autre part des moyens d'accrochage disposés sur la pédale et destinés à solidariser ladite cale à la pédale,
lesdits moyens d'accrochage sur la pédale comportant un organe d'enclenchement avant fixe et un organe d'enclenchement arrière mobile ayant chacun une conformation mâle destinée à coopérer avec une conformation femelle disposée à l'avant respectivement à l'arrière de la cale, caractérisé en ce que l'organe d'enclenchement arrière mobile est disposé entre deux organes fixes en relief formant simultanément butée anti-recul vers l'arrière et pente latérale apte à coopérer avec un rebord latéral dudit creux de la semelle pour le dégagement latéral de la chaussure par pivotement latéral de la chaussure.

Selon d'autres caractéristiques de l'invention :
- lesdits organes en relief sur le corps de pédale présentent une hauteur telle que l'organe d'enclenchement arrière mobile soit sensiblement au ras des organes en relief ;
- l'organe d'enclenchement arrière mobile présente de part et d'autre de son corps un faible jeu respectif par rapports aux deux organes en relief ;
- l'angle d'inclinaison de la pente est de l'ordre de 45° ;
- chacun desdits organes en relief présente une surface de butée inclinée vers l'arrière ;
- l'angle d'inclinaison à la verticale est de l'ordre de 3° ;
- la cale est tenue entre les organes d'enclenchement avant et arrière avec un jeu permettant une certaine liberté de déplacement de la cale en translation dans le sens longitudinal du corps de pédale à l'encontre de l'action d'un moyen élastique (12), et cette liberté de déplacement longitudinal a une valeur inférieure à l'engagement de la partie de la cale sous le moyen d'enclenchement avant afin empêcher le dégagement intempestif de la chaussure par l'arrière lors d'un basculement de celle-ci vers le haut.

Un autre objet de l'invention est une pédale équipée du dispositif de fixation selon l'invention.

L'invention sera maintenant décrite plus en détail à l'aide d'un exemple non limitatif d'un mode de réalisation de la pédale selon l'invention en référence aux dessins annexés sur lesquels :
- La figure 1 est une vue de dessus d'une pédale droite pourvue d'un dispositif de fixation selon l'invention ;
- La figure 2 est une vue de dessous de la semelle d'une chaussure pour un cycliste VTT dans laquelle la cale se trouve dans un évidement entre deux surfaces d'appui ;
- La figure 3 est une vue latérale illustrant les organes fixes en relief selon l'invention et l'angle de la surface de butée anti-recul de ces organes ;
- La figure 4 est une coupe médiane du corps de pédale perpendiculairement à l'axe de pédale ;
- La figure 5a est une vue de derrière d'une pédale, montrant une chaussure en position de pédalage ;
- La figure 5b est une vue de derrière d'une pédale, montrant une chaussure pratiquement dégagée suite à un pivotement de la chaussure vers l'extérieur.

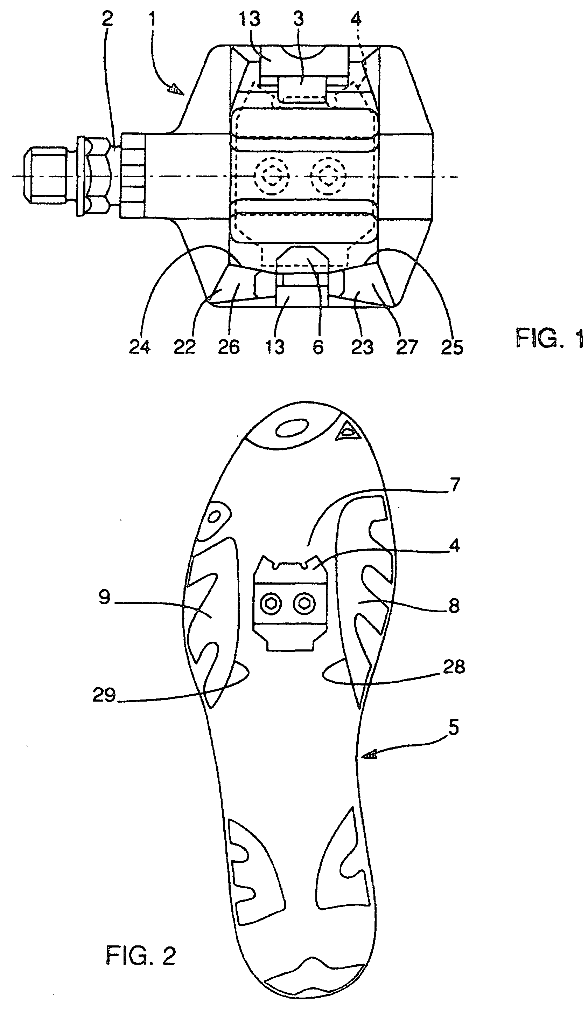

Les figures 1, 3 à 5 montrent une pédale pourvue du dispositif de fixation selon l'invention. La pédale comporte un corps de pédale 1, de préférence en matière plastique, dans lequel un axe de pédale 2 est logé dans des paliers (non représentés) de manière à permettre la rotation de la pédale lors du pédalage. L'axe de pédale 2 est relié par vissage à une manivelle de pédalier (non représentée).

Le corps de pédale 1 est muni d'un organe avant fixe 3 d'enclenchement d'une platine formant cale 4 fixée sous la semelle 5 d'une chaussure de cycliste (non représentée) et un organe arrière mobile 6 d'enclenchement de cette cale. La semelle 5 comporte un certain nombre de surfaces d'appui faisant saillie de la semelle proprement dite. La cale 4 est fixée dans un évidement 7 entre deux surfaces d'appuis 8,9.

Dans l'exemple illustré, la pédale est du type à double plan de retenue 10, 11 de la cale 4. La pédale est pourvue de deux éléments opposés dont chacun constitue l'organe avant fixe 3 sur l'un des deux plans de retenue et l'organe arrière mobile 6 sur l'autre plan de retenue.

Chaque élément 12 est constitué d'une lame élastique en métal qui s'étend sur toute l'épaisseur du corps de pédale 1 et qui fait saillie de part et d'autre de celui-ci. Les extrémités de chaque élément 12 sont conformées en crochets dirigés vers l'intérieur de manière à constituer les organes d'enclenchement proprement dits sur les deux plans de retenue.

Chaque lame 12 est encastrée sur le corps de pédale 1 et serrée contre celui-ci à l'aide d'une plaquette 13 disposée à l'extérieur de la lame. La plaquette 13 est fixée au corps de pédale 1 au moyen d'une vis 14 s'étendant à travers une fente aménagée dans la plaquette 13 et un trou aménagé dans la lame 12 pour être vissée dans un écrou noyé dans le corps de pédale 1.

La tête de vis est logée dans une rainure aménagée dans la partie inférieure externe de la plaquette 13.

Afin de régler la dureté de la lame 12, la longueur de son bras de levier peut être modifiée par un déplacement en hauteur de la plaquette 13.

Selon l'invention, le dispositif de fixation comporte en outre deux organes fixes en relief 22, 23, disposés de part et d'autre de l'organe d'enclenchement arrière mobile 6. Ces deux organes en relief présentent une hauteur telle que l'organe d'enclenchement arrière 6 soit sensiblement au ras des organes en relief pour que l'organe d'enclenchement ne fasse pas saillie au-dessus de ces organes. On évite ainsi un accrochage intempestif de la griffe arrière 6.

Dans le même but, le jeu respectif entre l'organe d'enclenchement arrière 6 et les deux organes fixes en relief 22, 23 est relativement faible.

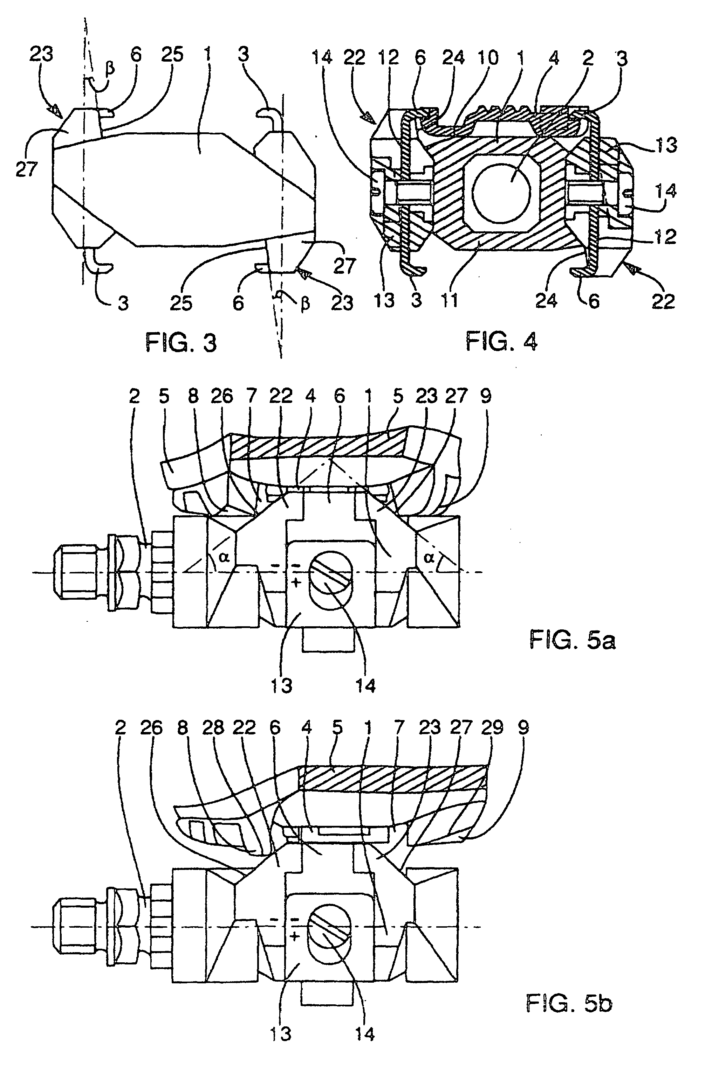

Chaque organe en relief 22, 23 comporte une surface de butée anti-recul respectif 24, 25. Cette surface de butée forme avantageusement un angle β à la verticale (voir figure 3). L'angle β est de l'ordre de 3° et sert à faciliter la mise en place de la cale 4 entre les griffes 3 et 6 lors du chaussage.

Chaque organe en relief 22, 23 comporte en outre une pente latérale respective 26, 27 destinée à coopérer avec un rebord latéral respectif 28, 29 délimitant le creux 7 dans lequel la cale 4 est disposée. L'angle d'inclinaison α des pentes 26, 27 est de l'ordre de 45°.

La figure 5a montre que lorsque la cale est fixée entre les griffes dans la position de pédalage, les surfaces d'appuis 8, 9 reposent contre la face supérieure du corps de pédale 1 et qu'elles se trouvent très proches des organes en relief respectifs ou qu'elles sont contiguës de ceux-ci comme cela est montré à la figure 5a.

La figure 5b montre une chaussure pivotée vers l'extérieur à la phase finale d'un mouvement de dégagement de la cale 4 de sa prise avec les griffes 3, 6. Cette opération est bien connue en soi et ne sera pas décrite en détail ici. On peut cependant observer sur cette figure que le rebord 28 délimitant la surface d'appui 8 vers l'intérieur se trouve toujours en contact avec la pente 28 de l'organe en relief 8 après avoir monté cette pente qui lors du dégagement fait fonction de came déplaçant la partie correspondante de la semelle vers le haut pour ainsi faciliter le mouvement de dégagement.

En outre, la cale 4 est tenue entre les organes d'enclenchement avant et arrière avec un jeu permettant une certaine liberté de déplacement de la cale en translation dans le sens longitudinal du corps de pédale 1. Avantageusement, la liberté de déplacement longitudinal a une valeur inférieure à l'engagement de la partie de la cale sous le moyen d'enclenchement avant afin empêcher le dégagement intempestif de la chaussure par l'arrière lors d'un basculement de celle-ci vers le haut.

Est ainsi obtenu un dispositif de fixation permettant l'enclenchement et le dégagement aisé de la cale 4 sur la pédale et qui en même temps réduit les forces nécessaires au chaussage et au déchaussage, tout en assurant le maintien de la cale d'une manière efficace entre les éléments d'accrochage.

L'invention concerne également toute pédale équipée du dispositif de fixation selon l'invention.

D'autres modes de réalisation sont possibles sans pour autant sortir du cadre de l'invention. L'invention peut par exemple sans difficulté être applique à une pédale à simple face de retenue.

## Revendications

1. Dispositif de fixation automatique d'une chaussure de cycliste sur une pédale de bicyclette, notamment pour une bicyclette tout terrain, comportant en combinaison :
- d'une part une platine formant cale (4) solidaire d'une semelle (5) de chaussure et disposée dans un creux (7) de celle-ci comportant des rebords latéraux (28, 29) s'étendant de part et d'autre de la cale (4),
- d'autre part des moyens d'accrochage (3, 6) disposés sur le corps de pédale (1) et destinés à solidariser ladite cale (4) au corps de pédale,
- lesdits moyens d'accrochage sur la pédale comportant un organe d'enclenchement avant fixe (3) et un organe d'enclenchement arrière mobile (6) **caractérisé en ce que** lesdits organes d'enclenchement avant (3) et arrière (6) ont chacun une conformation mâle destinée à coopérer avec une conformation femelle disposée à l'avant respectivement à l'arrière de la cale (4), et **en ce que** l'organe d'enclenchement arrière mobile (6) est disposé entre deux organes fixes en relief (22, 23) formant simultanément butée (24, 25) anti-recul vers l'arrière et pente latérale (26, 27) apte à coopérer avec un rebord latéral (28, 29) dudit creux (7) de la semelle (5) pour le dégagement latéral de la chaussure par pivotement latéral de la chaussure.

2. Dispositif de fixation selon la revendication 1, **caractérisé en ce que** lesdits organes en relief (22, 23) sur le corps de pédale (1) présentent une hauteur telle que l'organe d'enclenchement arrière mobile (6) soit sensiblement au ras des organes en relief (22, 23).

3. Dispositif de fixation selon la revendication 1 ou 2, **caractérisé en ce que** l'organe d'enclenchement arrière mobile (6) présente de part et d'autre de son corps un faible jeu respectif par rapports aux deux organes en relief (22, 23).

4. Dispositif de fixation selon l'une quelconque des revendications précédentes, **caractérisé en ce que** l'angle d'inclinaison de la pente (26, 27) est de l'ordre de 45°.

5. Dispositif de fixation selon l'une quelconque des revendications précédentes, **caractérisé en ce que** chacun desdits organes en relief (22, 23) présente une surface de butée (24, 25) inclinée vers l'arrière.

6. Dispositif de fixation selon la revendication 5, **caractérisé en ce que** l'angle d'inclinaison à la verticale (4) est de l'ordre de 3°.

7. Dispositif de fixation selon l'une quelconque des revendications précédentes, **caractérisé en ce que** la cale (4) est tenue entre les organes d'enclenchement avant et arrière (3, 6) avec un jeu permettant une certaine liberté de déplacement de la cale (4) en translation dans le sens longitudinal du corps de pédale (1) à l'encontre de l'action d'un moyen élastique (12), et **en ce que** cette liberté de déplacement longitudinal a une valeur inférieure à l'engagement de la partie de la cale (4) sous le moyen d'enclenchement avant (3) afin empêcher le dégagement intempestif de la chaussure par l'arrière lors d'un basculement de celle-ci vers le haut.

8. Pédale de cycle, notamment pour une bicyclette tout terrain, comportant un dispositif de fixation automatique d'une chaussure de cycliste sur une pédale de bicyclette, comportant en combinaison :
- d'une part une platine formant cale (4) solidaire d'une semelle (5) de chaussure et disposée dans un creux (7) de celle-ci comportant des rebords latéraux (28, 29) s'étendant de part et d'autre de la cale (4),
- d'autre part des moyens d'accrochage (3, 6) disposés sur le corps de pédale (1) et destinés à solidariser ladite cale (4) au corps de pédale,
lesdits moyens d'accrochage sur la pédale comportant un organe d'enclenchement avant fixe (3) et un organe d'enclenchement arrière mobile (6) **caractérisé en ce que** lesdits organes d'enclenchement avant (3) et arrière (6) ont chacun une conformation mâle destinée à coopérer avec une conformation femelle disposée à l'avant respectivement à l'arrière de la cale (4), et **en ce que** l'organe d'enclenchement arrière mobile (6) est disposé entre deux organes fixes en relief (22, 23) formant simultanément butée (24, 25) anti-recul vers l'arrière et pente latérale (26, 27) apte à coopérer avec un rebord latéral (28, 29) dudit creux (7) de la semelle (5) pour le dégagement latéral de la chaussure par pivotement latéral de la chaussure.

9. Pédale de cycle selon la revendication 8, **caractérisée en ce que** le dispositif de fixation est réalisé selon au moins une des revendications 2 à 6.

## Claims

1. Device for automatically securing a cycling shoe on a bicycle pedal, in particular for an all-terrain bicycle, comprising in combination:
on the one hand, a plate forming a cleat (4) connected to a sole (5) of a shoe and disposed in a hollow (7) thereof comprising lateral edges (28, 29) extending either side of the cleat (4),
on the other hand, attachment means (3, 6) disposed on the pedal body (1) and intended to connect said cleat (4) to the pedal body,
said attachment means on the pedal comprising a front fixed engagement member (3) and a rear movable engagement member (6),
**characterised in that** said front (3) and rear (6) engagement members each having a male configuration intended to cooperate with a female configuration disposed respectively at the front and at the rear of the cleat (4), and **in that** the rear movable engagement member (6) is disposed between two fixed projecting members (22, 23) forming simultaneously a rearward non-return abutment (24, 25) and a lateral slope (26, 27) capable of cooperating with a lateral edge (28, 29) of said hollow (7) of the sole (5) for the lateral disengagement of the shoe by lateral pivoting of the shoe.

2. Securing device according to claim 1, **characterised in that** said projecting members (22, 23) on the pedal body (1) have a height such that the rear movable engagement member (6) is substantially level with the projecting members (22, 23).

3. Securing device according to either of claims 1 or 2, **characterised in that** the rear movable engagement member (6) has on either side of its body a slight respective play relative to the two projecting members (22, 23).

4. Securing device according to any of the preceding claims, **characterised in that** the angle of inclination of the slope (26, 27) is approximately 45°.

5. Securing device according to any of the preceding claims, **characterised in that** each of said projecting members (22, 23) has a rearwardly inclined abutment surface (24, 25).

6. Securing device according to claim 5, **characterised in that** the angle of inclination to the vertical (4) is approximately 3°.

7. Securing device according to any of the preceding claims, **characterised in that** the cleat (4) is held between the front and rear engagement members (3, 6) with play allowing a certain freedom of movement of the cleat (4) in translation in the longitudinal direction of the pedal body (1) against the action of a resilient means (12), and **in that** this freedom of longitudinal movement has a value less than the engagement of the portion of the cleat (4) below the front engagement means (3), so as to prevent the untimely rearward disengagement of the shoe during upward swinging thereof.

8. Cycle pedal, in particular for an all-terrain bicycle, comprising a device for automatically securing a cyclist's shoe on a bicycle pedal, comprising in combination:
on the one hand, a plate forming a cleat (4) connected to a sole (5) of a shoe and disposed in a hollow (7) thereof comprising lateral edges (28, 29) extending either side of the cleat (4),
on the other hand, attachment means (3, 6) disposed on the pedal body (1) and intended to connect said cleat (4) to the pedal body,
said attachment means on the pedal comprising a front fixed engagement member (3) and a rear movable engagement member (6),
**characterised in that** said front (3) and rear (6) engagement members each have a male configuration intended to cooperate with a female configuration disposed respectively at the front and at the rear of the cleat (4), and **in that** the rear movable engagement member (6) is disposed between two fixed projecting members (22, 23) forming simultaneously a rearward non-return abutment (24, 25) and a lateral slope (26, 27) capable of cooperating with a lateral edge (28, 29) of said hollow (7) of the sole (5) for the lateral disengagement of the shoe by lateral pivoting of the shoe.

9. Cycle pedal according to claim 8, **characterised in that** the securing device is produced according to at least one of claims 2 to 6.

## Patentansprüche

1. Automatische Fixierungsvorrichtung für einen Fahrradfahrerschuh auf dem Pedal eines Fahrrads, insbesondere eines Mountain Bikes, die kombiniert aufweist:
- einerseits eine keilbildende Platte (4), die mit einer Schuhsohle (5) fest verbunden und in einer Vertiefung (7) von diesem angeordnet ist, welche seitliche Ränder (28, 29) aufweist, die sich beiderseits des Keils (4) erstrecken,
- andererseits Befestigungsmittel (3, 6), die an dem Pedalkörper (1) angeordnet sind und dazu bestimmt sind, diesen Keil (4) fest mit dem Pedalkörper zu verbinden, wobei diese Befestigungsmittel an dem Pedal ein vorderes, feststehendes Einschnapporgan (3) und ein hinteres, bewegliches Einschnapporgan (6) umfassen,
**dadurch gekennzeichnet,**
**dass** das genannte vordere und hintere Einschnapporgan (3, 6) jeweils eine Einsteck-Formgebung aufweist, die dazu bestimmt ist, mit einer Aufnahme-Formgebung zusammenzuwirken, die vorne bzw. hinten an dem Keil (4) angeordnet ist, und dass das hintere, bewegliche Einschnapporgan (6) zwischen zwei reliefartigen, feststehenden Organen (22, 23) angeordnet ist, die sowohl einen Anschlag (24, 25) gegen Zurückrutschen als auch eine seitliche Abschrägung (26, 27), die geeignet ist, mit einem Seitenrand (28, 29) der genannten Vertiefung (7) der Sohle (5) zusammenzuwirken, bildet, so dass der Schuh durch seitliches Kippen des Schuhs seitlich gelöst werden kann.

2. Fixierungsvorrichtung nach Anspruch 1,
**dadurch gekennzeichnet,**
**dass** die reliefartigen Organe (22, 23) an dem Pedalkörper (1) eine Höhe dergestalt aufweisen, dass das hintere, bewegliche Einschnapporgan (6) sich im wesentlichen auf Höhe der reliefartigen Organe (22, 23) befindet.

3. Fixierungsvorrichtung nach Anspruch 1 oder 2,
**dadurch gekennzeichnet,**
**dass** das hintere, bewegliche Einschnapporgan (6) beiderseits seines Körpers zu den beiden reliefartigen Organen (22, 23) jeweils ein geringes Spiel aufweist.

4. Fixierungsvorrichtung nach einem der vorherigen Ansprüche,
**dadurch gekennzeichnet,**
**dass** der Neigungswinkel der Abschrägung (26, 27) in der Größenordnung von 45° liegt.

5. Fixierungsvorrichtung nach einem der vorherigen Ansprüche,
**dadurch gekennzeichnet,**
**dass** jedes der reliefartigen Organe (22, 23) eine nach hinten geneigte Anschlagfläche (24, 25) aufweist.

6. Fixierungsvorrichtung nach Anspruch 5,
**dadurch gekennzeichnet,**
**dass** der Neigungswinkel zur Vertikalen (4) in der Größenordnung von 3° liegt.

7. Fixierungsvorrichtung nach einem der vorherigen Ansprüche,
**dadurch gekennzeichnet,**
**dass** der Keil (4) zwischen dem vorderen und dem hinteren Einschnapporgan (3, 6) mit einem Spiel gehalten wird, das eine gewisse Freiheit zum geradlinigen Verschieben des Keils (4) in Längsrichtung des Pedalkörpers (1) gegen die Einwirkung eines Federmittels (12) gestattet, und dass diese Freiheit zur Längsverschiebung einen Wert aufweist, der unterhalb des Eingriffs des Keilteils (4) unter dem vorderen Einschnapporgan (3) liegt, um ein ungewolltes Lösen des Schuhs nach hinten bei dessen Schwenken nach oben zu verhindern.

8. Pedal für Fahrräder, insbesondere für Mountain Bikes, das eine automatische Fixierungsvorrichtung für einen Fahrradfahrerschuh auf dem Pedal eines Fahrrads aufweist, welche kombiniert aufweist:
- einerseits eine keilbildende Platte (4), die mit einer Schuhsohle (5) fest verbunden und in einer Vertiefung (7) von diesem angeordnet ist, welche seitliche Ränder (28, 29) aufweist, die sich beiderseits des Keils (4) erstrecken,
- andererseits Befestigungsmittel (3, 6), die an dem Pedalkörper (1) angeordnet sind und dazu bestimmt sind, diesen Keil (4) fest mit dem Pedalkörper zu verbinden, wobei diese Befestigungsmittel an dem Pedal ein vorderes, feststehendes Einschnapporgan (3) und ein hinteres, bewegliches Einschnapporgan (6) umfassen,
**dadurch gekennzeichnet,**
**dass** das genannte vordere und hintere Einschnapporgan (3, 6) jeweils eine Einsteck-Formgebung aufweist, die dazu bestimmt ist, mit einer Aufnahme-Formgebung zusammenzuwirken, die vorne bzw. hinten an dem Keil (4) angeordnet ist, und dass das hintere, bewegliche Einschnapporgan (6) zwischen zwei reliefartigen, feststehenden Organen (22, 23) angeordnet ist, die sowohl einen Anschlag (24, 25) gegen Zurückrutschen als auch eine seitliche Abschrägung (26, 27), die geeignet ist, mit einem Seitenrand (28, 29) der genannten Vertiefung (7) der Sohle (5) zusammenzuwirken, bildet, so dass der Schuh durch seitliches Kippen des Schuhs seitlich gelöst werden kann.

9. Fahrradpedal nach Anspruch 8,
**dadurch gekennzeichnet,**
**dass** die Fixierungsvorrichtung gemäß mindestens einem der Ansprüche 2 bis 6 ausgeführt ist.
